# EUROPEAN PATENT APPLICATION

(11) **EP 4 286 248 A1**
(43) Date of publication of application: **06.12.2023**
(21) Application number: 22745788.4
(22) Date of filing: 24.01.2022
(51) Int. Cl.: B62D 5/04, B62D 7/09

(54) **STEERING SYSTEM AND VEHICLE PROVIDED WITH SAME**

(30) Priority: 27.01.2021 JP 2021010857
(71) Applicant: NTN Corporation, Osaka-shi, Osaka 550-0003 (JP)
(72) Inventor: ISHIHARA, Norio, Iwata-shi, Shizuoka 438-8510 (JP); ITOU, Atsushi, Iwata-shi, Shizuoka 438-8510 (JP)
(74) Representative: Maikowski & Ninnemann Patentanwälte Partnerschaft mbB
(86) International application number: PCT/JP2022/002366
(87) International publication number: WO 2022/163567

(57) **Abstract**

Provided is a steering system which includes a hub unit (1) with a steering function and a control device (29). A steering actuator (5) includes a motor (26) and a linear drive mechanism (25) configured to convert a rotational output from the motor (26) to a linear motion. An angle sensor (54) is configured to sense a rotational angle of the motor (26) and capable of generating two or more angle sensor values. A position sensor (44) is configured to sense a position of the linear drive mechanism (25) which represents an amount of displacement of an output rod (25a) and capable of outputting the same in the form of a position sensor value. The control device (29) is configured to compare each of the angle sensor values sensed and generated by the angle sensor (54) against the position sensor value sensed by and output from the position sensor (44) to determine whether any one of the angle sensor values is incorrect.

## Description

### CROSS REFERENCE TO THE RELATED APPLICATION

This application is based on and claims Convention priority to Japanese patent application No. 2021-010857, filed January 27, 2021, the entire disclosure of which is herein incorporated by reference as a part of this application.

### BACKGROUND OF THE INVENTION

### (Field of the Invention)

The present invention relates to a steering system and a vehicle comprising the same and concerns a technology to controllably adjust left and/or right wheel(s) of a vehicle to an appropriate steering angle as a function of given travel conditions of the vehicle to thereby achieve an improved fuel economy, stable travelling performance, and an enhanced safety of the vehicle.

### (Description of Related Art)

In a typical vehicle such as an automobile, a steering wheel is mechanically coupled to a steering assembly which, in turn, has an end, on each side thereof, connecting to a left or right wheel through a tie rod. Hence, the initial setup dictates the steering angle of the left and/or right wheel that is produced through the operation of the steering handle.

Known vehicle geometries include: (i) a "parallel geometry" in which the steering angles of the left and right wheels are identical; and (ii) an "Ackerman geometry" in which the inside wheel is steered by a turning angle greater than that of the outside wheel in order to define a single turn center.

In an Ackerman geometry, the steering angle difference between the left and right wheels is determined such that both wheels can make a turn about the single identical center, to thereby facilitate smooth turn travel of the vehicle during turning in a low-velocity regime where a centrifugal force acting on the vehicle is negligible. Yet, a parallel geometry is preferred over an Ackerman geometry during turning in a high-velocity regime where a centrifugal force is not negligible, since it is desired that a cornering force be generated by wheels in such a direction that balances out the centrifugal force.

In a typical vehicle, since a steering assembly is mechanically coupled to wheels as mentioned above, a single, fixed steering geometry can normally be taken. Hence, a geometry that is intermediate between an Ackerman geometry and a parallel geometry is often selected. However, this results in an insufficient difference in a steering angle between left and right wheels and leads to an excessive steering angle for the outside wheel in a low-velocity regime. On the other hand, an excessive steering angle is produced for the inside wheel in a high-velocity regime. Such an unwanted unevenness in the distribution of a lateral force among the inside and outside wheels can lead to a poor fuel economy caused by an increased running resistance, as well as premature wears of tires. Furthermore, the inefficient use of the inside and outside wheels leads to issues like loss of smoothness during cornering.

To address the foregoing, the Applicant proposed a hub unit with a steering function, which performs per-wheel, auxiliary steering of a wheel as a function of given travel conditions of a vehicle, in a manner supplementary to steering performed through the operation of a steering wheel by a driver of the vehicle (cf. Patent Document 3).

### [Related Document]

### [Patent Document]

[Patent Document 1] DE102012206337
[Patent Document 2] JP Laid-open Patent Publication No. 2014-061744
[Patent Document 3] JP Laid-open Patent Publication No. 2019-006226

### SUMMARY OF THE INVENTION

The system of the vehicle taught from Patent Document 1 employs two motors. Commensurate with the increase in the number of motors is an increase in cost and overall size of the system of the vehicle.

With respect to the vehicle taught from Patent Document 2, a hub bearing is supported in a cantilevered fashion on a turning shaft, thus resulting in a poor rigidity with the possibility of an extreme G-force altering a steering geometry if it ever occurs.

Also, if a speed reducer is deployed on the turning axis, the size of the system and/or the vehicle including a motor increase. Such an increase in the size of a motor and other components makes it difficult to arrange them in their entirety within the interior side of a wheel. Further, when the deployed speed reducer has a large speed reduction ratio, there will be a trade-off in responsiveness.

Such conventional mechanisms with an auxiliary steering function are intended to be used to change the toe angle or camber angle of a wheel of a vehicle to a given desired level, which is one of the reasons they require several motor(s) and/or speed reducer(s) which complicate the design of the system of the vehicle. Further, it is a challenging task to ensure rigidity, and ensuring rigidity requires an increase in size and, therefore, weight of a system.

System components will be located at the back (or on a vehicle body-side) of a hub unit if the turning axis of a mechanism responsible for the auxiliary steering function is to be coincident with a kingpin axis, and the outcome is an increase in their overall size and, therefore, weight.

A complex design is required to enable the angle of a wheel to be changed to a given desired level while a vehicle is travelling. This implies the presence of a large number of parts and a larger size of the system as a whole. Size reduction of a system is previously achieved by a hub unit with a steering function disclosed in Patent Document 3.

For fine-grained control of a steering angle by means of a hub unit with a steering function, proper management of the rotational angle of a motor and of the position of a linear drive mechanism (or a trapezoidal screw) is necessary. This may require real-time monitoring through the use of a motor angle sensor in the form of a resolver, a magnetic sensor, etc. and a position sensor in the form of a magnetic sensor, etc. Further, during the execution of the control, the values from the motor angle sensor and the position sensor may be checked against each other to see if an actuator in the hub unit with a steering function is correctly functioning. The execution of the control should be discontinued when one of the motor angle sensor or the position sensor is found to be in failure.

However, there is a likelihood that, if a failure occurs in the motor angle sensor during the execution of the control, the value from the position sensor can no longer be consistent with the value from the motor angle sensor, thereby resulting in immediate disruption of the control. This likelihood may be avoided by deploying two motor angle sensors. Still, this results in a size increase of the hub unit with a steering function and therefore may lead to possible interference of the hub unit with a steering function with other components such as a suspension.

An object of the present invention is to provide a steering system and a vehicle comprising the same, with which a compact overall system design can be achieved while ensuring the safety of the system through the redundancy of output signals indicating the rotational angle of a motor.

A steering system according to the present invention includes:
a hub unit with a steering function, the hub unit including a main hub unit which includes a hub bearing configured to rotatably support a wheel, a unit support member located at an undercarriage frame component of a suspension system and pivotably supporting the main hub unit about a turning axis that extends in a vertical direction, and a steering actuator configured to pivotably drive the main hub unit about the turning axis;
a control device configured to control the steering actuator, the steering actuator including a motor and a linear drive mechanism, the linear drive mechanism including an output rod and configured to convert a rotational output from the motor to a linear motion of the output rod to extend or retract the output rod to drive the main hub unit into rotation about the turning axis;
an angle sensor configured to sense a rotational angle of the motor and capable of generating two or more angle sensor values; and
a position sensor configured to sense a position of the linear drive mechanism which represents an amount of displacement of the output rod and capable of outputting the same in the form of a position sensor value, the control device being configured to compare each of the angle sensor values sensed and generated by the angle sensor against the position sensor value sensed by and output from the position sensor to determine whether any one of the angle sensor values is incorrect.

According to such a configuration, rotations of the motor cause the output rod of the linear drive mechanism to extend or retract to drive the main hub unit into rotation about the turning axis to steer the same. In this context, accurate adjustments must controllably be made to the steering angle of a wheel to control the behaviors of the vehicle. Further, in the event of a failure, the angle of the wheel should be returned to an initial state in order to safely discontinue the execution of the control.

In the present invention, a sensor capable of generating two or more angle sensor values is used as an angle sensor that senses the rotational angle of the motor. The control device is configured to compare each of the angle sensor values sensed and generated by the angle sensor against the position sensor value sensed by and output from the position sensor to determine whether any one of the angle sensor values is incorrect. In this way, for example, as compared to a traditional design in which two motor angle sensors are installed, a compact overall system design can be achieved while ensuring the safety of the system through the provision of redundancy.

The control device may be configured to continue execution of control of the steering actuator if it determines that one of the angle sensor values is incorrect but at least another or the other of the angle sensor values is correct. In this way, when one of the angle sensor values is incorrect but at least another or the other of the angle sensor values is correct, the execution of the control can be continued as there is no need for discontinuation. Thus, the safety of the steering system can be secured.

Each of the angle sensor and the position sensor may comprise a magnetic sensor. In this case, a simplified configuration that does not require a light source or more can be achieved. Further, excellent durability in environments subjected to vibrations during driving can also be achieved.

The control device may include a steering controller configured to receive a command signal from a superordinate control unit and the position sensor value from the position sensor to generate a current command signal for the motor and an actuator driver and controller configured to generate a current as a function of the current command signal to apply the same to the motor to drive the steering actuator. According to such a configuration, the steering actuator of the hub unit with a steering function can be controlled with a simple design.

A vehicle according to the present invention includes a steering system having one of the above configurations in accordance with the present invention and front and rear wheels, at least one of which is supported by means of the hub unit with a steering function.

Hence, various effects and advantages discussed above with respect to a steering system according to the present invention can be achieved. When applied to a drive wheel, which is typically a front wheel, the hub unit with a steering function is effective in making adjustments to the toe angle of the wheel during driving. Further, when applied to a driven wheel, which is typically a rear wheel, the hub unit with a steering function can be used to shorten the minimum turn radius during driving in a low-velocity regime through slight steering of the driven wheel.

### (Effect of the Invention)

A steering system according to the present invention includes:
a hub unit with a steering function, the hub unit including a main hub unit which includes a hub bearing configured to rotatably support a wheel, a unit support member located at an undercarriage frame component of a suspension system and pivotably supporting the main hub unit about a turning axis that extends in a vertical direction, and a steering actuator configured to pivotably drive the main hub unit about the turning axis;
a control device configured to control the steering actuator, the steering actuator including a motor and a linear drive mechanism, the linear drive mechanism including an output rod and configured to convert a rotational output from the motor to a linear motion of the output rod to extend or retract the output rod to drive the main hub unit into rotation about the turning axis;
an angle sensor configured to sense a rotational angle of the motor and capable of generating two or more angle sensor values; and
a position sensor configured to sense a position of the linear drive mechanism which represents an amount of displacement of the output rod and capable of outputting the same in the form of a position sensor value, the control device being configured to compare each of the angle sensor values sensed and generated by the angle sensor against the position sensor value sensed by and output from the position sensor to determine whether any one of the angle sensor values is incorrect. In this way, a compact overall system design can be achieved while ensuring the safety of the system through the redundancy of output signals indicating the rotational angle of the motor.

A vehicle according to the present invention includes a steering system having one of the above configurations in accordance with the present invention and front and rear wheels, at least one of which is supported by means of the hub unit with a steering function. Thus, a compact overall system design can be achieved while ensuring the safety of the system through increasing the redundancy of output signals indicating the rotational angle of the motor.

Any combinations of at least two features disclosed in the claims and/or the specification and/or the drawings should also be construed as encompassed by the present invention. Especially, any combinations of two or more of the claims should also be construed as encompassed by the present invention.

### BRIEF DESCRIPTION OF THE DRAWINGS

The present invention will be more clearly understood from the following description of preferred embodiments made by referring to the accompanying drawings. However, the embodiments and the drawings are given merely for the purpose of illustration and explanation, and should not be used to delimit the scope of the present invention, which scope is to be delimited by the appended claims. In the accompanying drawings, alike symbols indicate alike or corresponding parts throughout the different figures, and:
Fig. 1 shows a vertical cross sectional view of a hub unit with a steering function in a steering system in accordance with a first embodiment of the present invention, together with its surrounding features;
Fig. 2 shows a horizontal cross sectional view of the hub unit with a steering function, together with a block diagram of a control system therefor;
Fig. 3 shows a perspective view of the external appearance of the hub unit with a steering function;
Fig. 4 shows a side view of the hub unit with a steering function;
Fig. 5 shows a top view of the hub unit with a steering function;
Fig. 6 shows a cross section taken along the line VI-VI of Fig. 4;
Fig. 7 shows a side view of a linear drive mechanism of the hub unit with a steering function;
Fig. 8 shows an enlarged fragmentary view of a portion of Fig. 2;
Fig. 9A shows an enlarged cross section illustrating an angle sensor and its surroundings in the hub unit with a steering function;
Fig. 9B shows an end view taken along the line IXB-IXB of Fig. 9A;
Fig. 10 shows an explanatory diagram illustrating a concept configuration of the angle sensor used in the hub unit with a steering function;
Fig. 11 shows a flowchart illustrating the execution of control by the steering system in a step-wise manner;
Fig. 12 shows a schematic plan view of an example of a vehicle that includes the steering system;
Fig. 13 shows a schematic plan view of another example of a vehicle that includes one of such steering systems; and
Fig. 14 shows a schematic plan view of yet another example of a vehicle that includes one of such steering systems.

### DESCRIPTION OF EMBODIMENTS

### [First Embodiment]

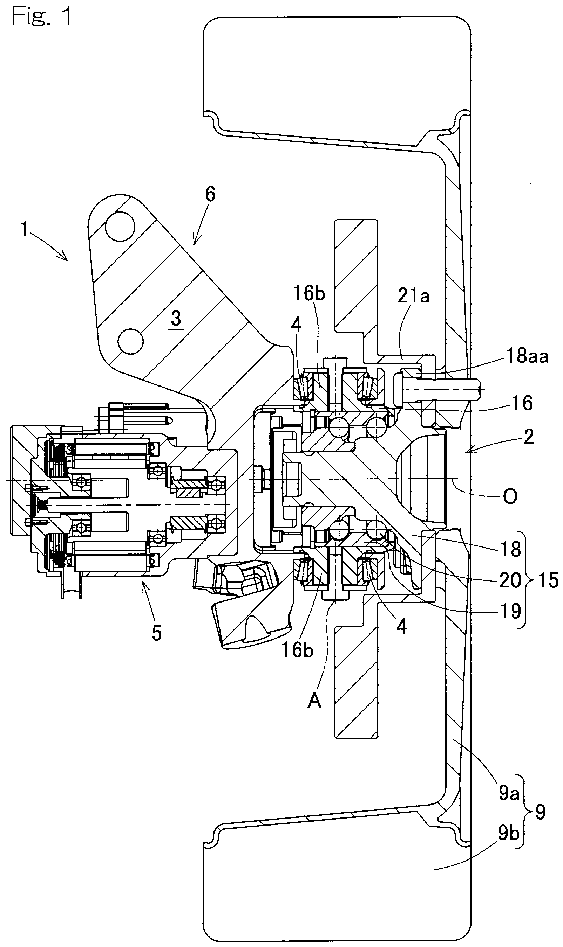

A steering system in accordance with an embodiment of the present invention will be described in conjunction with Figs. 1 to 12.

The steering system includes a hub unit with a steering function and a control device, which controls a steering actuator of the hub unit with a steering function and which will be later discussed. The steering system is installed to a vehicle.

### <General Configuration of Hub Unit with Steering Function>

As depicted in Fig. 1, the hub unit 1 with a steering function includes a main hub unit 2, a unit support member 3, rotation-permitting support components 4, and a steering actuator 5. The unit support member 3 is located at a knuckle 6, which is an undercarriage frame component, in an integral manner therewith. The steering actuator 5 is located on an inboard side of the unit support member 3, while the main hub unit 2 is located on an outboard side of the unit support member 3. An outboard side refers to an exterior side of a vehicle in a widthwise direction of the vehicle, while an inboard side refers to a central side of the vehicle in a widthwise direction of the vehicle, in an installed position of the hub unit 1 with a steering function to the vehicle. It should be noted that the hub unit 1 with a steering function may sometimes be simply referred to as a hub unit 1.

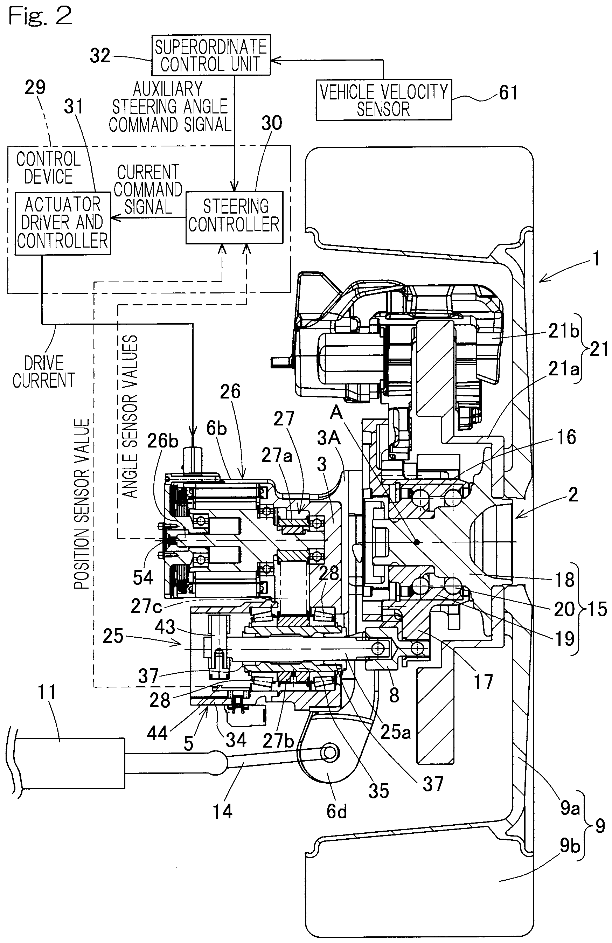

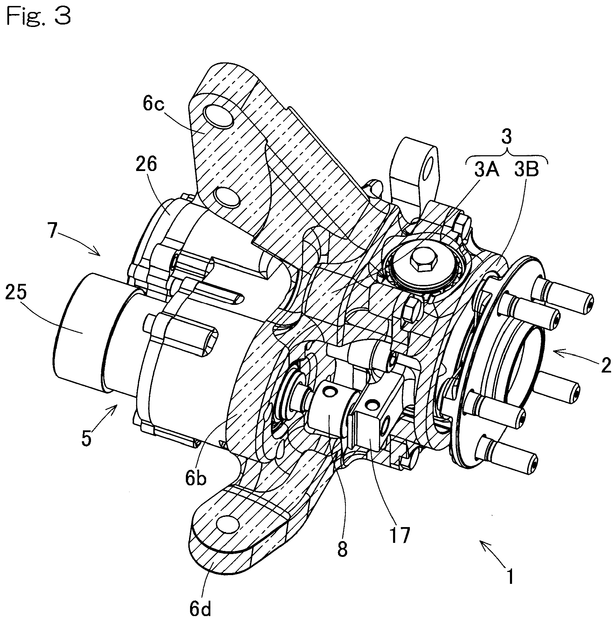

As depicted in Figs. 2 and 3, the main hub unit 2 is coupled through a joint assembly 8 to the steering actuator 5. Typically, a boot (not shown) is attached around the joint assembly 8 for protection from moisture and dust.

As depicted in Fig. 1, the main hub unit 2 is supported by the unit support member 3 through the interposition of the rotation-permitting support components 4, 4 at two upper and lower locations, in such a manner that the main hub unit 2 can rotate about a turning axis A that extends in a vertical direction. The turning axis A is different from an axis O of rotation of a wheel 9 and is also different from a kingpin axis about which primary steering of the wheel 9 can be effected. As with a typical vehicle, a kingpin angle is set to a value in the range of 10° to 20° with the aim of improving the straight-line stability of a vehicle during driving. The turning axis of the hub unit 1 with a steering function in the instant embodiment defines an angle (or an axis) that is different from the kingpin angle. The wheel 9 includes a wheel rim 9a and a tire 9b thereon.

### <Site of Installation of Hub Unit 1 with Steering Function>

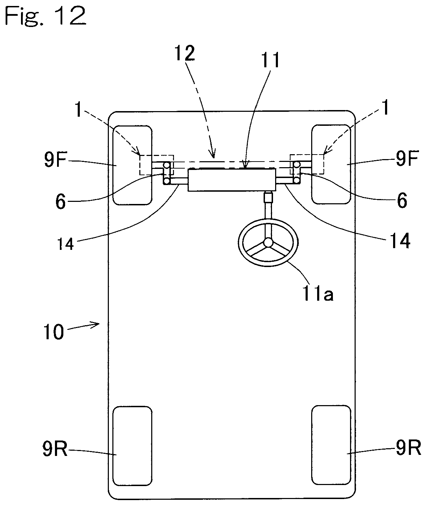

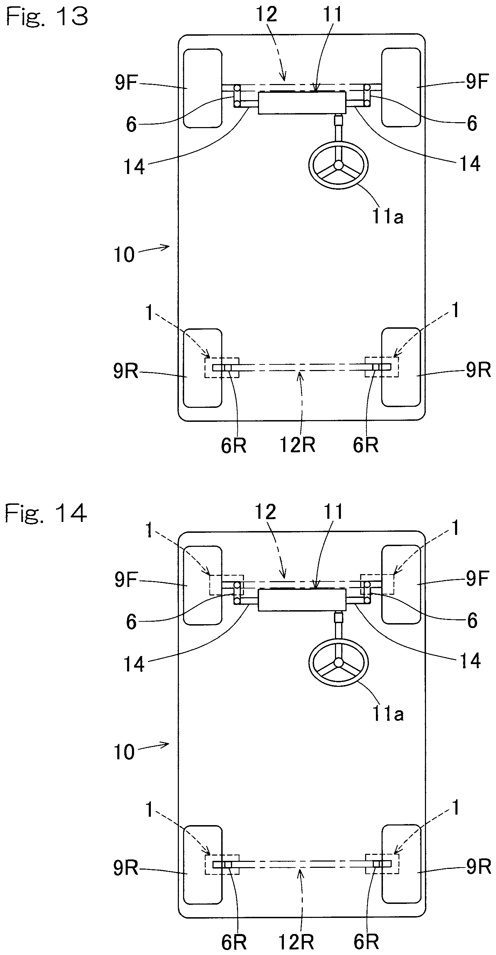

The hub unit 1 with a steering function is installed in place in an integral manner with the knuckle 6 of a suspension system 12, to serve as a mechanism to perform independent steering of a left or right wheel by a slight angle (within about ±5°) in a supplementary manner to the steering of the wheel - which is, in the instant embodiment, a drive wheel or, in particular, a front wheel 9F of a vehicle 10 as shown in Fig. 12 - by a steering assembly 11. When used with a drive wheel, the hub unit 1 with a steering function may even steer a left or right wheel independently by a relatively large angle of, for example, 10° to 20° in addition to the abovementioned slight angle, if required by the vehicle control. The same applies to hub units 1 with a steering function shown in Fig. 14, which will be later discussed.

As depicted in Figs. 2 and 12, the steering assembly 11 is installed to a vehicle body and can be actuated through the operation of a steering wheel 1 1a by a driver or through commands from an autonomous driving system or a driving assistance system (both not shown), for example. A tie rod 14 that is extended or retracted thereby is coupled to a steering connection 6d (which will be later discussed) of the unit support member 3. While the steering assembly 11 is, for example, of a rack and pinion design, it may be a steering assembly of any type of design as an alternative thereto. While the suspension system 12 used is, for example, a suspension mechanism of a strut design in which a shock absorber is to be directly fixed to the knuckle 6, it may, instead, be a suspension mechanism of a different design like a double wishbone design or a multilink design.

### <Main Hub Unit 2>

As depicted in Fig. 1, the main hub unit 2 includes a hub bearing 15 that provides the support of the wheel 9, an outer ring 16 in the form of an annular component with turning shaft parts, and an arm section 17 (Fig. 3) that forms a section through which a steering force can be introduced.

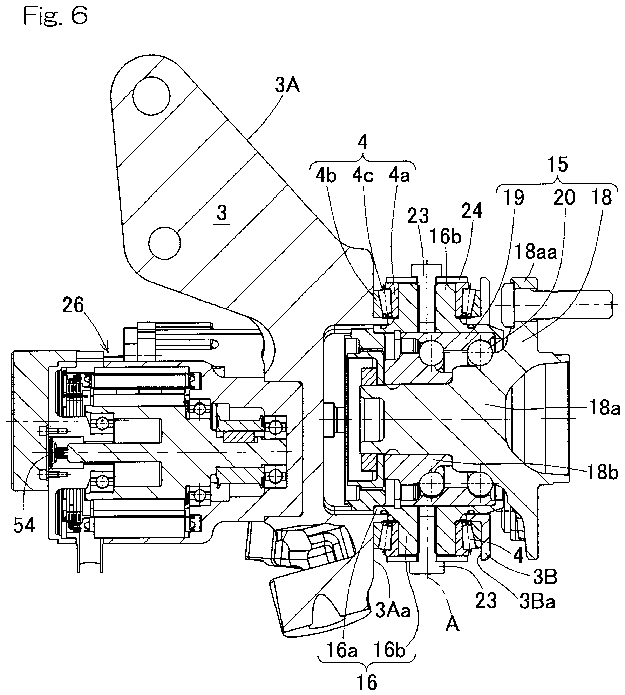

As depicted in Fig. 6, the hub bearing 15 includes an inner race 18, an outer race 19, and rolling elements 20, in the form of, for example, balls, interposed between the inner and outer races 18, 19, and serves to provide a bridge between vehicle-body side components and the wheel 9 (Fig. 1).

The hub bearing 15 in the illustrated example is an angular-contact ball bearing that includes the outer race 19 as a stationary race, the inner race 18 as a rotational race, and the rolling elements 20 in a double-row arrangement. The inner race 18 includes a wheel hub component 18a that has a hub flange 18aa and forms an outboard-side-raceway surface, and an inner race component 18b that forms an inboard-side-raceway surface. As depicted in Fig. 1, the wheel rim 9a of the wheel 9 is bolted to the hub flange 18aa in a superposed fashion with a brake rotor 21a. The inner race 18 rotates about the axis O of rotation.

As depicted in Fig. 6, the outer ring (or the annular component with turning shaft parts) 16 includes an annular part 16a fitted onto the outer peripheral surface of the outer race 19 and turning shaft parts 16b, 16b shaped like trunnion shafts and provided so as to protrude upwards and downwards from the outer periphery of the annular part 16a. Each of the turning shaft parts 16b, 16b also serves as an upper or lower mount shaft part and is positioned coaxial to the turning axis A.

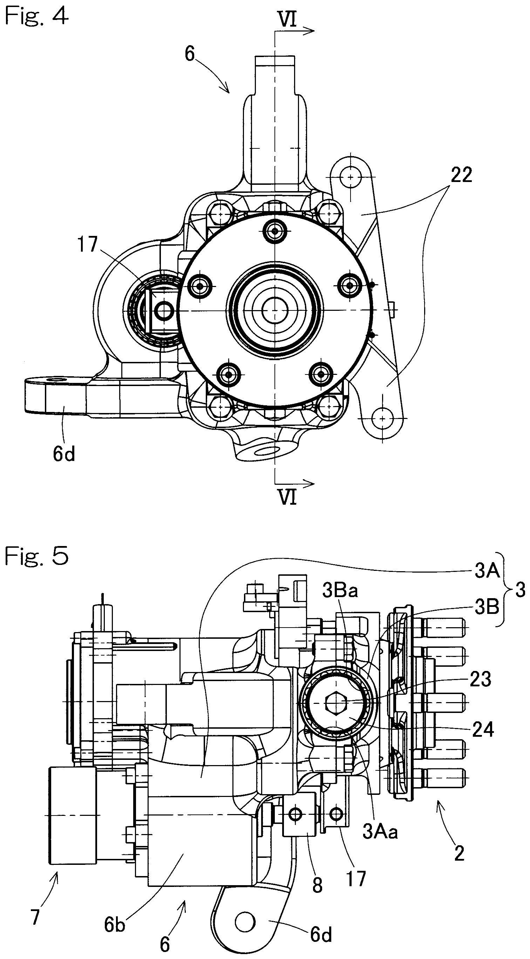

As depicted in Fig. 2, a brake 21 includes the brake rotor 21a and a brake caliper 21b. The brake caliper 21b is mounted to brake caliper mount sections 22 (Fig. 4) that are formed integrally with the outer race 19 at two upper and lower locations so as to protrude therefrom in an arm-like manner.

### <Rotation-permitting Support Components and Unit Support Member>

As depicted in Fig. 6, each of the rotation-permitting support components 4 is formed of a rolling bearing. A tapered roller bearing is used for the rolling bearing in the instant example. The rolling bearing includes an inner race 4a fitted onto the outer periphery of a respective one of the turning shaft parts 16b, an outer race 4b fitted to the unit support member 3, and a plurality of rolling elements 4c interposed between the inner and outer races 4a, 4b.

The unit support member 3 includes a unit support member body 3A and a unit support member attachment 3B. The unit support member attachment 3B having a general ring shape is detachably fixed to an outboard end of the unit support member body 3A. The unit support member attachment 3B has an inboard side surface having, at each of upper and lower portions thereof, a fitting hole-forming section 3Ba that is formed therein and shaped to have a partial, concave spherical surface.

As depicted in Figs. 5 and 6, the unit support member body 3A has an outboard end having, at each of upper and lower portions thereof, a fitting hole-forming section 3Aa that is formed therein and shaped to have a partial, concave spherical surface. The unit support member attachment 3B is fixed to an outboard end of the unit support member body 3A such that the fitting hole-forming sections 3Aa, 3Ba are combined with each other at each of the upper and lower portions thereof to define a fitting hole having an overall, continuous circumference. The outer race 4b is fitted to this fitting hole. Note that, in Fig. 3, the unit support member 3 is hatched with dashed dotted lines.

As depicted in Fig. 6, each of the turning shaft parts 16b defines a hollow shaft having an inner peripheral bore in which a radially extending, female threading is formed and into which a bolt 23 is positioned in threaded engagement with the female threading. By screwing the bolt 23 onto the female threading with a disc-shaped thrust member 24 interposed between the bolt 23 and an end face of the inner race 4a, a thrust force is applied to the end face of the inner race 4a to thereby impart a preload to a respective one of the rotation-permitting support components 4. Accordingly, an initial preload is thus created so as to provide a preload that will not dissipate when an external force such as the weight of the vehicle is loaded onto the hub unit. In this way, the rigidity of each of the rotation-permitting support components 4 can be increased. It should be noted that, instead of the tapered roller bearing, an angular-contact ball bearing or a four-point contact ball bearing can also be used for the rolling bearing for such a rotation-permitting support component 4. A preload in that case can also be imparted in the same way as described above.

As depicted in Fig. 1, the upper and lower turning shaft parts 16b, 16b are supported by the unit support member 3 through the interposition of the respective rotation-permitting support components 4, 4, in such a way that each of the rotation-permitting support components 4 is positioned within the wheel rim 9a of the wheel 9. In the instant example, each of the rotation-permitting support components 4 is positioned within wheel rim 9a at about the middle of the wheel rim 9a in a widthwise direction thereof.

As depicted in Fig. 2, the arm section 17 defines a point of application of an auxiliary steering force to the outer race 19 of the hub bearing 15 and protrudes from a portion of the outer periphery of the outer ring 16 or the outer race 19 in an integral manner therewith. The arm section 17 is pivotably coupled through the joint assembly 8 to an output rod 25a which defines a linear drive output of the steering actuator 5. Thus, extension or retraction (i.e., a linear motion) of the output rod 25a of the steering actuator 5 causes rotation - therefore, effects auxiliary steering - of the main hub unit 2 about the turning axis A.

### <Steering Actuator 5>

As depicted in Figs. 2 and 3, the steering actuator 5 includes a motor 26 that serves as a rotary drive source to drive the main hub unit 2 into rotation about the turning axis A (Fig. 1), a speed reducer 27 that reduces the speed of rotation from the motor 26, and a linear drive mechanism 25 that converts a rotational output in positive and negative directions from the speed reducer 27 to a back-and-forth movement (i.e., a linear motion) of the output rod 25a. While the motor 26 is in the form of a permanent magnet synchronous motor by way of example, it may alternatively be in the form of a DC motor or an induction motor.

### <Speed Reducer 27>

A transmission mechanism of a loop-over design such as a belt transmission mechanism, or a gear train, etc. can be used for the speed reducer 27, for example. In the example of Fig. 2, a belt transmission mechanism is used. The speed reducer 27 includes a drive pulley 27a, a driven pulley 27b, and a belt 27c. The drive pulley 27a is coupled to a rotor shaft 26b of the motor 26. The driven pulley 27b is disposed on a rotatable, nut component 35 of the linear drive mechanism 25. The driven pulley 27b is positioned parallel to the rotor shaft 26b. A drive power from the motor 26 is transmitted from the drive pulley 27a via the belt 27c to the driven pulley 27b. The drive pulley 27a, the driven pulley 27b, and the belt 27c cooperate to form the reducer mechanism 27 of a loop-over design.

### <Linear Drive Mechanism 25>

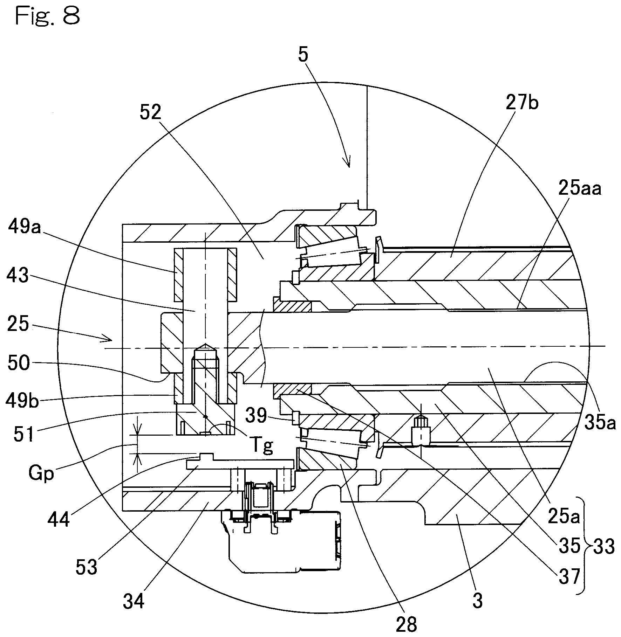

As depicted in Figs. 2 and 8, a lead screw mechanism of a slide screw design such as a trapezoidal screw design or a triangular screw design can be used for the linear drive mechanism 25. In the instant example, a lead screw mechanism 33 using a slide screw in the form of a trapezoidal screw is used. Grease is sealingly enclosed within the slide screw. The linear drive mechanism 25 includes the lead screw mechanism 33, rotary support bearings 28, an anti-rotation component 43, and an actuator casing 34 in which these components are housed.

The lead screw mechanism 33 includes the nut component 35, the output rod 25a in the form of a threaded shaft, and sliding bearings 37. The output rod 25a is prevented from rotating relative to the unit support member 3 by the anti-rotation component 43. The nut component 35 is rotatably supported by the unit support member 3 through the interposition of the rotary support bearings 28, 28 at axial opposite sides of the nut component 35, such that the driven pulley 27b is positioned on the outer periphery of the nut component 35 at an intermediate segment of the nut component 35 in an axial direction thereof. The nut component 35 has an inner periphery in which a female threading 35a is provided. The output rod 25a has an outer periphery on which a male threading 25aa meshing with the female threading 35a of the nut component 35 is provided.

Arranged at the axial opposite ends of the nut component 35 are the sliding bearings 37, 37 through which the output rod 25a is slidably inserted. Each of the sliding bearings 37 acts to guide the axial movement of the output rod 25a and counteracts a radial force component - which loads on the output rod 25a - of an external force that is introduced to the output rod 25a from the side of the tire.

In the instant example, two tapered roller bearings are assembled in face-to-face arrangement through the interposition of the driven pulley 27b therebetween, to serve as the rotary support beatings 28. While the arrangement of the rotary support bearings 28, 28 may be either one of back-to-back arrangement or face-to-face arrangement, face-to-face arrangement is preferred for assemblability and easier preload adjustment using a shim, etc. It should be noted that the rotary support bearings 28 may be angular-contact ball bearings. The arrangement of the rotary support bearings 28, 28 in that case may also be either one of back-to-back arrangement or face-to-face arrangement.

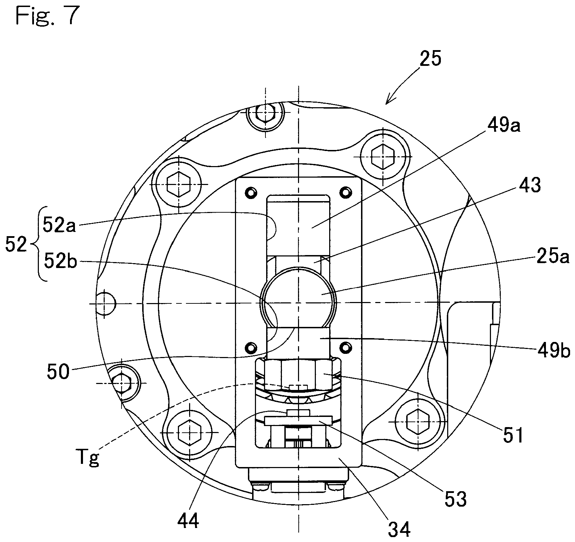

As depicted in Figs. 7 and 8, the anti-rotation component 43 is in the form of a shaft-like member located at an inboard-side end, which is a rear end, of the output rod 25a. For instance, at the inboard-side end of the output rod 25a, the anti-rotation component 43 is fittedly fixed to the output rod 25a by penetrating therethrough, so as to extend in a direction that is both perpendicular to a vertical direction and an axial direction of the output rod 25a. Annular sliding bearings 49a, 49b are fitted onto the outer periphery of the anti-rotation component 43 at axial opposite ends of the anti-rotation component 43.

A portion of the inboard end of the output rod 25a which is opposed to one of the sliding bearings 49b is formed to have a flat surface (or a so-called D-shaped cut surface) 50 that is aligned parallel to one of opposite end faces of that sliding bearing 49b. The one of the opposite end faces of that sliding bearing 49b is brought into abutment with the flat surface 50 of the output rod 25a, and a bolt 51 thrusts against the other of the opposite end faces of that sliding bearing 49 by being brought into threaded engagement with the anti-rotation component 43. In this way, the anti-rotation component 43, the bolt 51, and the sliding bearings 49a, 49b are restricted to desired positions relative to the actuator casing 34 (i.e., desired positions in the top-to-bottom direction in Fig. 2). It should be noted that the bolt 51 is provided with a target Tg, which will be later discussed, for measurement with a position sensor.

Formed inside the actuator casing 34 is a generally cuboidal guide channel 52 that includes guide surfaces 52a, 52b for guiding the outer peripheral surfaces of the respective sliding bearings 49a, 49b. Put differently, the anti-rotation component 43 is in slidable contact, through the sliding bearings 49a, 49b, with the guide surfaces 52a, 52b of the actuator casing 34 which serves as a stationary part of the linear drive mechanism 25. Therefore, the anti-rotation component 43 can be made to slide, through the sliding bearings 49a, 49b, along the guide channel 52 of the actuator casing 34 so as to cause a back-and-forth movement of the output rod 25a in an axial direction.

As depicted in Fig. 2, the linear drive mechanism 25 includes a lead screw mechanism that uses a slide screw in the form of said trapezoidal screw. In this way, a possible reverse input from the tire 9b can be counteracted more effectively. The steering actuator 5 including the motor 26, the speed reducer 27, and the linear drive mechanism 25 is assembled into a subassembly and detachably mounted, e.g., bolted, to a casing 6b. While the steering actuator 5 in the instant embodiment includes the motor 26, the speed reducer 27, and the linear drive mechanism 25, the speed reducer may be omitted where appropriate. That is, it is also possible to adopt a design in which drive power from the motor 26 is directly transmitted to the linear drive mechanism 25 without passing through any speed reducer. Other mechanisms capable of converting a rotary motion to a linear motion, such as a ball screw or a rack and pinion mechanism, can also be used for the linear drive mechanism 5, aside from the trapezoidal screw presented in the instant embodiment.

To more accurately control the angle of the wheel 9, the rotational angle of the motor 26 and the position of the linear drive mechanism 25 need to be known. For this purpose, the hub unit 1 with a steering function includes a position sensor and an angle sensor that are discussed below.

### <Position Sensor>

As depicted in Figs. 7 and 8, the actuator casing 34 is provided with a position sensor 44 that senses the position of the linear drive mechanism 25. The position sensor 44 senses (or monitors) an amount of displacement of the output rod 25a in an axial direction and is capable of outputting the same in the form of a position sensor value. While a variety of sensors such as magnetic, optical, and capacitive sensors can be used for the position sensor 44, a magnetic sensor is used in the instant embodiment.

The position sensor 44 is secured to a substrate 53 which is immobilized within the actuator casing 34. The position sensor 44 faces the path along which the target Tg - which will be later discussed - for measurement with the position sensor is extended or retracted. Further, the position sensor 44 and the target Tg for measurement with the position sensor oppose each other across a predetermined gap Gp when the output rod 25a is in a predefined axial position (or extension/retraction position). The predefined axial position and the predetermined gap Gp can be any axial position and any gap that are respectively selected at a design stage, etc., and can, for example, be selected by determining appropriate axial position and gap through at least one of experiments or simulations.

As depicted in Fig. 8, the anti-rotation component 43 is provided with a permanent magnet which serves as the target Tg for measurement with the position sensor. More specifically, the bolt 51 threaded onto an axial end of the anti-rotation component 43 has a head section that is provided with the permanent magnet. Moreover, the bolt 51 is made of, for example, a non-magnetic material such as resin or stainless steel.

When the bolt 51 is in the form of a resinous bolt, the permanent magnet is integrally molded in the resinous bolt 51, for example. When the bolt 51 is formed by a non-magnetic metal material such as stainless steel, the bolt 51 has a head section with a surface having a recess (not shown) which is formed therein, in which the permanent magnet is disposed, and which is, then, capped with an adhesive, etc., such that the permanent magnet is embedded in the recess, for example. In this way, the position sensor 44 reads the varying magnetic field that emanates from the permanent magnet and is induced by the extension and retraction of the output rod 25a, so as to sense the position of extension or retraction of the output rod 25a. It should be noted that the bolt may be omitted to secure the permanent magnet directly to the anti-rotation component 43.

### <Angle Sensor>

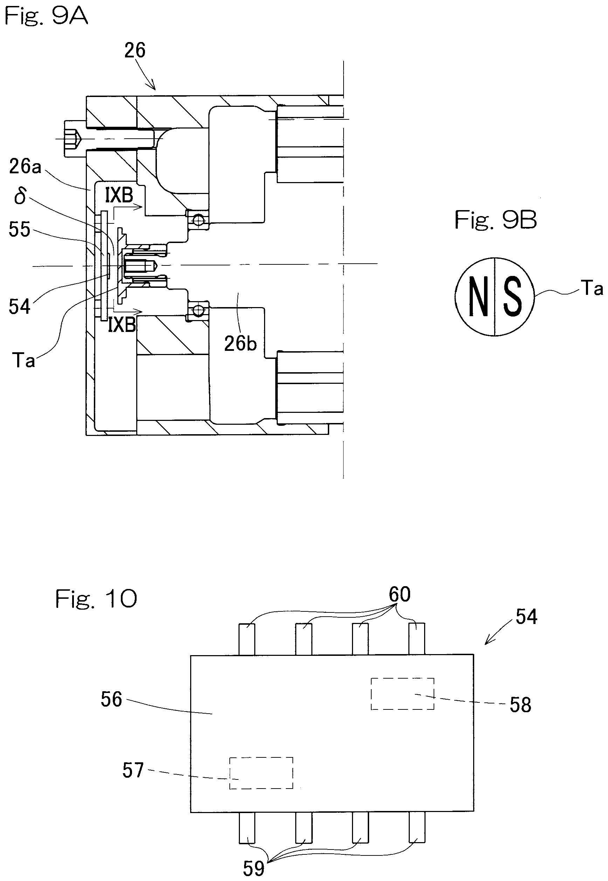

Fig. 9A shows an enlarged cross section illustrating an angle sensor and its surroundings in the hub unit with a steering function. Fig. 9B shows an end view taken along the line IXB-IXB of Fig. 9A. A motor casing 26a of the motor 26 is provided with an angle sensor 54 that senses the rotational angle of the motor 26 and is capable of generating two or more angle sensor values. In the instant example, a magnetic sensor disposed on a sensor IC to generate two output signals (or angle sensor values 1 and 2) is used for the angle sensor 54, thereby assuring redundancy and allowing for a compact design.

The angle sensor 54 is immobilized via a substrate 55 to the motor casing 26a. A permanent magnet Ta which serves as a target for measurement with the angle sensor and rotates as a unit with the rotor shaft 26b of the motor 26 is secured to an inboard-side end of the rotor shaft 26b. The angle sensor 54 and the permanent magnet Ta oppose each other across a predetermined axial gap δ. The angle sensor 54 in the form of a magnetic sensor reads the varying magnetic field that emanates from the permanent magnet Ta induced by the rotation of the rotor shaft 26b, so as to sense the rotational angle of the motor 26. Moreover, as conceptually depicted in Fig. 10, the angle sensor 54 has a single package 56 in which a first output circuit 57 and a second output circuit 58 are provided and is capable of generating two or more angle sensor values. The package 56 has separate output terminals 59, 60 from which the outputs of the respective output circuits 57, 58 are fed out. It should be noted that the aforementioned magnetic sensor of an axial gap design is a non-limiting example of the angle sensor 54 and that a magnetic sensor of a so-called radial gap design can also be used instead.

### <Other Mechanical Features>

As depicted in Fig. 2, the casing 6b is integrally formed with the unit support member body 3A so as to be a part of the unit support member 3. The casing 6b is shaped in the form of a blind cylinder in which a motor accommodating section that supports the motor 26 and a linear drive mechanism accommodating section that supports the linear drive mechanism 25 are located. The motor accommodating section has a fitting cavity which is formed therein and in which the motor 26 is supported in a predetermined position within the casing. The linear drive mechanism accommodating section has a fitting cavity which is formed therein and in which the linear drive mechanism 25 is supported in a predetermined position within the casing, and also has a through bore which is formed therein and which permits the extension and retraction of the output rod 25a therethrough, for example.

As depicted in Fig. 3, the unit support member body 3A includes the aforementioned casing 6b, a shock absorber mount section 6c that serves as a mount for a shock absorber, and the steering assembly connection 6d that serves as a connection to the steering assembly 11 (Fig. 2). The shock absorber mount section 6c and the steering assembly connection 6d are also formed integrally with the unit support member body 3A. The outer surface of the unit support member body 3A has an upper portion at which the shock absorber mount section 6c is formed to protrude therefrom. The outer surface of the unit support member body 3A has a lateral surface portion at which the steering assembly connection 6d is formed to protrude therefrom.

### <Control System>

As depicted in Fig. 2, a control device 29 includes a steering controller 30 and an actuator driver and controller 31. The steering controller 30 generates a current command signal as a function of an auxiliary steering angle command signal (or command signal) provided from a superordinate control unit 32. In this context, the steering controller 30 uses a position sensor output that is from the position sensor 44 and represents information on the position of extension or retraction of the output rod 25a, with which feedback control can be implemented to properly and accurately manage the angle of the wheel 9.

The superordinate control unit 32 is a control unit superordinate to the steering controller 30. For example, a vehicle control unit (or VCU in short) that implements general control of the vehicle is used as the superordinate control unit 32. The actuator driver and controller 31 generates a current as a function of the current command signal that is input from the steering controller 30, in order to controllably drive the steering actuator 5. The actuator driver and controller 31 controls power supplied to coils of the motor 26. For example, the actuator driver and controller 31 comprises a half-bridge circuit using switching elements (not shown) to implement PWM control with which a voltage applied to the motor is selected through the ON/OFF duty cycle of the switching elements. In this way, a slight change can be made to the angle of the wheel 9 in a supplementary manner to the steering of the same wheel via the operation of the steering wheel by a driver. A toe angle level can also be adjusted as a function of given situations during straight-line driving. It should be noted that, as an alternative to responding to the operation of the steering wheel by a driver, the steering system can also actuate the steering actuator 5, 5 in response to commands from an autonomous driving system or a driving assistance system (both not shown), for example.

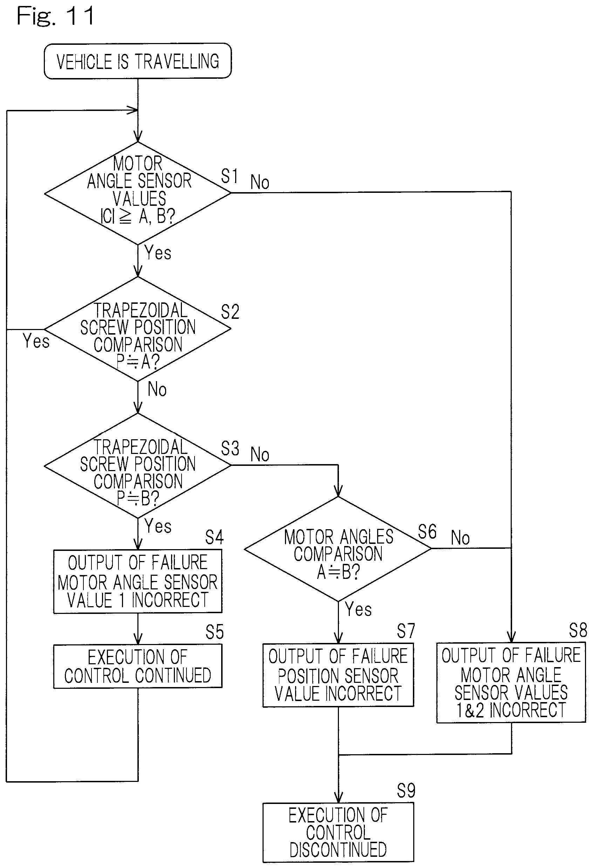

Fig. 11 shows a flowchart illustrating the execution of control by the steering system in a step-wise manner. A description will be made by referring to Fig. 2 as necessary.

During the travel of the vehicle, the steering controller 30 of the control device 29 determines, at all times, whether the execution of the control by the steering system should be continued or discontinued. For example, the steering controller 30 can determine whether the vehicle is travelling or not, from an output of a sensor such as a vehicle velocity sensor 61 or a vehicle wheel speed sensor. Upon the start of the process, the steering controller 30 checks whether the angle sensor value 1 and the angle sensor value 2 are within a predetermined range C of sensed angle to see if they represent correct operations (at Step S1: |C| ≥ A, B).

In this context, if the values for the angle sensor value 1 and the angle sensor value 2 are outside the predetermined range of sensed angle (at Step S 1: the outcome is No), the steering controller 30 discontinues the execution of the control by the steering system (at Step S9) because any one of the angle sensor value 1 and the angle sensor value 2 is suspected to be incorrect, and outputs an indication that the angle sensor values 1 and 2 are incorrect (at Step S8). If a failure in the angle sensor 54 has not been confirmed at Step S1 (at Step S1: the outcome is Yes), the steering controller 30 compares each of the angle sensor values sensed and generated by the angle sensor 54 against the position sensor value sensed by and output from the position sensor 44 to determine whether any one of the angle sensor values is incorrect (at Steps S2 and S3).

More particularly, at Step S2, the steering controller 30 compares the value A for the angle sensor value 1 against the position sensor value P to check them against each other. If these values exhibit only a small deviation (at Step S2: the outcome is Yes), the steering controller 30 determines that the position sensor 44 and the angle sensor 54 are correctly functioning and continues the execution of the control. For example, a predetermined deviation is selected through at least one of experiments or simulations. The same also applies to a predetermined deviation at Steps S3 and S6 which will be later discussed. If these values exhibit a large deviation (at Step S2: the outcome is No), the steering controller 30 compares the value B for the angle sensor value 2 against the position sensor value P to determine which sensor(s) is/are in failure (at Step S3) because at least one of the sensors is suspected to be in failure.

If, at Step S3, the position sensor value P and the value B for the angle sensor value 2 exhibit only a small deviation (at Step S3: the outcome is Yes), the steering controller 30 outputs the failure of the angle sensor value 1 (at Step S4) and continues the executing the control (at Step S5). In other words, the steering controller 30 continues the execution of the control of the steering actuator 5, if it determines that the angle sensor value 1 is incorrect but the angle sensor value 2 is correct. If the position sensor value P and the value B for the angle sensor value 2 exhibit a large deviation (at Step S3: the outcome is No), the steering controller 30 further compares the value A for the angle sensor value 1 against the value B for the angle sensor value 2 (at Step S6).

If the value A for the angle sensor value 1 and the value B for the angle sensor value 2 exhibit only a small deviation (at Step S6: the outcome is Yes), the steering controller 30 determines that the position sensor value P is incorrect, outputs the failure of the position sensor value P (at Step S7), and discontinues the execution of the control (at Step S9). If the value A for the angle sensor value 1 and the value B for the angle sensor value 2 exhibit a large deviation (at Step S6: the outcome is No), the steering controller 30 outputs an indication that the angle sensor values 1 and 2 are incorrect (at Step S8) and discontinues the execution of the control (at Step S9).

### <Effects and Benefits>

According to the steering system discussed thus far, the main hub unit 2 which includes the hub bearing 1 that supports the wheel 9 can be rotated as desired about the turning axis A through the actuation of the steering actuator 5. Such a rotation serves to provide per-wheel, independent and auxiliary steering in a supplementary manner to steering performed through the operation of the steering wheel by a driver, i.e., in a supplementary manner to rotation of the knuckle 6 about the kingpin axis that is produced through the steering assembly 11. By performing auxiliary steering of the left and right wheels 9, 9 by differing angles, the toe angle setting between the left and right wheels 9, 9 can be changed in any desired manner.

For this reason, the hub unit 1 with a steering function can be used with either one of a drive wheel and a driven wheel that can be, for example, a front wheel and a rear wheel, respectively. For use with a drive wheel, the hub unit 1 with a steering function can be installed to a member which can be re-oriented through the steering assembly 11, to provide a mechanism that makes a slight change to the angle of the wheel 9 - which is either an independently-driven, left or right wheel or one of left and right wheels that are coordinately driven - in a supplementary manner to the steering of the same wheel performed through the operation of the steering wheel by a driver. A slight angle is sufficient as the auxiliary steering angle to bring about an improved dynamic performance of the vehicle and achieve safer and more stable travel of the vehicle. A possible auxiliary steering angle within ±5° is sufficient. The auxiliary steering angle is provided by the execution of the control of steering actuator 5.

Further, during turning, the steering angle difference between the left and right wheels can be changed as a function of a driving speed. For instance, a steering geometry change can be effected while driving, such as by selecting a parallel geometry during turning in a high-velocity regime and selecting an Ackerman geometry during turning in a low-velocity regime. By thus being able to change a wheel angle to a given desired level while driving, the dynamic performance of the vehicle is improved, thereby allowing for safe and stable travel of the vehicle. The turn radius of the vehicle during turning can also be shortened by appropriately making changes to the steering angles of the left and right drive wheels, thereby providing enhanced, small-radius turning performance.

Furthermore, during straight-line driving, adjustments can be made to a toe angle level as a function of given situations, so as to assure driving stability in a high-velocity regime while lowering the running resistance of the vehicle in a low-velocity regime to prevent deterioration in fuel economy as a part of various adjustments, for example.

For use with a driven wheel such as a rear wheel 9R, the hub unit 1 with a steering function can be used to bring the steering angle of the rear wheel 9R in phase with that of a front wheel 9F during turning in order to suppress possible yaw generated as a result of steering, thereby achieving an improved stability of the vehicle. During straight-line driving, adjustments can be made to the left and right toe angles independently of each other to assure driving stability of the vehicle.

Accurate adjustments must controllably be made to the steering angle of the wheel 9 to control the behaviors of the vehicle in these fashions. Further, in the event of a failure, the angle of the wheel 9 should be returned to an initial state in order to safely discontinue the execution of the control.

In the instant embodiment, a sensor capable of generating two or more angle sensor values is used as the angle sensor 54 that senses the rotational angle of the motor 26. The control device 29 compares each of the angle sensor values sensed and generated by the angle sensor 54 against the position sensor value sensed by and output from the position sensor 44 to determine whether any one of the angle sensor values is incorrect. In this way, for example, as compared to a traditional design in which two motor angle sensors are installed, a compact overall system design can be achieved while ensuring the safety of the system through the provision of redundancy.

The control device 29 continues the execution of the control of the steering actuator 5 if it determines that one of the angle sensor values is incorrect but at least another or the other of the angle sensor values is correct. In this way, when one of the angle sensor values is incorrect but at least another or the other of the angle sensor values is correct, the execution of the control can be continued as there is no need for discontinuation. Thus, the safety of the steering system can be secured.

Each of the angle sensor 54 and the position sensor 44 comprises a magnetic sensor. For this reason, a simplified configuration that does not require a light source or more can be achieved. Further, excellent durability in environments subjected to vibrations during driving can also be achieved.

### <Further Embodiments>

Next, further embodiments will be described. In the following description, features corresponding to those discussed with respect to the preceding embodiment(s) are indicated with alike reference symbols and will not be explained to avoid redundancy. Where only a subset of features are described, the remaining features should be considered as identical to those in previously discussed embodiment(s) unless otherwise noted. Identical features produce identical effects and benefits. In addition to combinations of features particularly discussed in each of the preceding embodiment(s), partial features from different embodiments can also be combined with each other unless such combinations are inoperable.

### <Use with Driven Wheel>

The hub unit 1 with a steering function can also be used with a driven wheel. For example, as depicted in Fig. 13, the hub unit 1 with a steering function can be used to conduct steering of a rear wheel 9R in front-wheel-steering vehicle, by locating the same at an undercarriage frame component 6R - which also serves as the location of installation of a wheel bearing assembly - of a suspension system 12R that supports the rear wheel. When used with a driven wheel, the hub unit 1 with a steering function may even steer a left or right wheel independently by a relatively large angle of, for example, 10° to 20° in addition to the aforementioned slight steering angle, if required by the vehicle control.

Moreover, as depicted in Fig. 14, the hub unit 1 with a steering function can be used with each of left and right front wheels 9F, 9F which are drive wheels and each of left and right rear wheels 9R, 9R which are driven wheels.

While preferred embodiments have thus far been described with reference to the drawings, various additions, changes, or omissions can be made therein without departing from the principle of the present invention and, therefore, are also encompassed within the scope of the present invention.

### (Reference Symbols)

- 1: hub unit with steering function
- 2: main hub unit
- 3: unit support member
- 5: steering actuator
- 6: knuckle (undercarriage frame component)
- 9: wheel
- 9F: front wheel
- 9R: rear wheel
- 15: hub bearing
- 25: linear drive mechanism
- 25a: output rod
- 26: motor
- 29: control device
- 30: steering controller
- 31: actuator driver and controller
- 32: superordinate control unit
- 44: position sensor
- 54: angle sensor

## Claims

1. A steering system comprising:
a hub unit with a steering function, the hub unit including a main hub unit which includes a hub bearing configured to rotatably support a wheel, a unit support member located at an undercarriage frame component of a suspension system and pivotably supporting the main hub unit about a turning axis that extends in a vertical direction, and a steering actuator configured to pivotably drive the main hub unit about the turning axis;
a control device configured to control the steering actuator, the steering actuator including a motor and a linear drive mechanism, the linear drive mechanism including an output rod and configured to convert a rotational output from the motor to a linear motion of the output rod to extend or retract the output rod to drive the main hub unit into rotation about the turning axis;
an angle sensor configured to sense a rotational angle of the motor and capable of generating two or more angle sensor values; and
a position sensor configured to sense a position of the linear drive mechanism which represents an amount of displacement of the output rod and capable of outputting the same in the form of a position sensor value,
the control device being configured to compare each of the angle sensor values sensed and generated by the angle sensor against the position sensor value sensed by and output from the position sensor to determine whether any one of the angle sensor values is incorrect.

2. The steering system as claimed in claim 1, wherein the control device is configured to continue executing the control of the steering actuator if it determines that one of the angle sensor values is incorrect but at least another or the other of the angle sensor values is correct.

3. The steering system as claimed in claim 1 or 2, wherein each of the angle sensor and the position sensor comprises a magnetic sensor.

4. The steering system as claimed in any one of claims 1 to 3, wherein the control device includes a steering controller configured to receive a command signal from a superordinate control unit and the position sensor value from the position sensor to generate a current command signal for the motor and an actuator driver and controller configured to generate a current as a function of the current command signal to apply the same to the motor to drive the steering actuator.

5. A vehicle comprising a steering system as claimed in any one of claims 1 to 4 and front and rear wheels, at least one of which is supported by means of the hub unit with a steering function.
